# EUROPEAN PATENT APPLICATION

(11) **EP 4 324 617 A1**
(43) Date of publication of application: **21.02.2024**
(21) Application number: 22787966.5
(22) Date of filing: 23.03.2022
(51) Int. Cl.: B29C 45/17, B29C 45/26

(54) **RELAY BOX**

(30) Priority: 16.04.2021 US 202163175644 P; 04.06.2021 JP 2021094579
(71) Applicant: Minebea Mitsumi Inc., Kitasaku-gun, Nagano 3890293 (JP)
(72) Inventor: YAMAGUCHI, Taiji, Tokyo 144-0047 (JP); TAKAYAMA, Yoshimasa, Kitasaku-gun, Nagano 389-0293 (JP); HASEGAWA, Eiji, Kitasaku-gun, Nagano 389-0293 (JP)
(74) Representative: Zabel, Julia Elisabeth
(86) International application number: PCT/JP2022/013618
(87) International publication number: WO 2022/220041

(57) **Abstract**

Provided is a relay box able to reduce the risk of disconnection of a relay-connected sensor cable. This relay box relays and connects a sensor cable having one end connected to a sensor provided in a mold and a relay cable having one end connected to an amplifier provided on the outside of the mold. The relay box has a first connector connected to the other end of the relay cable, a second connector connected to the other end of the sensor cable, a relay part that electrically connects the first connector and the second connector to each other, and an attachable/detachable member attachable and detachable to/from the relay part. The second connector is attached to the mold so as not to be exposed from the mold when the attachable/detachable member is removed from the relay part. The second connector is attached to the mold so as not to be exposed from the attachable/detachable member when the attachable/detachable member is attached to the relay part.

## Description

### Technical Field

The present invention relates to a relay box.

### Background

For example, Patent Document 1 discloses a relay member that performs relay connection between a sensor cable having one end coupled to a sensor that is removably provided in an injection molding device and detects pressure in a mold or the like and a relay cable having one end coupled to an information processing device that performs processing based on the detection signal of the sensor.

### Related-Art Document

### Patent Document

Patent Document 1: Japanese Unexamined Patent Application Publication No. 2017-40657

Summary

### Problem to be Solved by the Invention

However, in the relay member of Patent Document 1, a part of the sensor cable that is relayed and connected by the relay member is exposed to the outside from the mold. As a result, there is a risk that the sensor cable is disconnected due to an event that an injection molding device, an operator, or the like may get caught on the exposed part.

An object of the present invention is to provide a relay box capable of reducing a risk of disconnection of a sensor cable that is relayed and connected.

### Means to solve the problem

A relay box to perform relay connection between a sensor cable with one end coupled to a sensor, that is provided in a mold, and a relay cable with one end coupled to an amplifier, that is provided outside the mold, includes a first connector coupled to the other end of the relay cable, a second connector coupled to the other end of the sensor cable, and a relay part configured to electrically couple the first connector and the second connector. The relay box includes a detachable member that is attachable to, and detachable from, the relay part. In a case where the detachable member is detached from the relay part, the relay box is attached to the mold such that the second connector is unexposed from the mold. In a case where the detachable member is attached to the relay part, the relay box is attached to the mold such that the second connector is unexposed from the detachable member.

### Effect of the Invention

According to the present invention, a relay box capable of reducing a risk of disconnecting a sensor cable that is relayed and connected can be provided.

### Brief Description of Drawings

[FIG. 1] FIG. 1 is a diagram illustrating an exposed example of a sensor cable in a relay member according to a comparative example.
[FIG. 2] FIG. 2 is a diagram illustrating an injection molding device in that a relay box is embedded in a mold according to the embodiment.
[FIG. 3] FIG. 3 is a diagram illustrating an injection molding device in that the relay box is externally attached to the mold according to the embodiment.
[FIG. 4] FIG. 4 is a cross-sectional view illustrating a configuration of the mold in the injection molding device.
[FIG. 5] FIG. 5 is a front view of the relay box in a state in that a detachable member is not provided according to the embodiment.
[FIG. 6] FIG. 6 is a top view of the relay box in the state where the detachable member is not provided according to the embodiment.
[FIG. 7] FIG. 7 is a side view of the relay box in the state where the detachable member is not provided according to the embodiment.
[FIG. 8] FIG. 8 is a front view of the relay box from that a protective member is detached.
[FIG. 9] FIG. 9 is a diagram illustrating an example in that the relay box is embedded in the mold according to the embodiment.
[FIG. 10] FIG. 10 is a front view of the relay box in a state in that the detachable member is provided according to the embodiment.
[FIG. 11] FIG. 11 is a top view of the relay box according to the embodiment in the state where the detachable member is provided.
[FIG. 12] FIG. 12 is a side view of the relay box in the state where the detachable member is provided according to the embodiment.
[FIG. 13] FIG. 13 is a rear view of the relay box in the state where the detachable member is provided according to the embodiment.

### Detailed Description of the Invention

One or more embodiments for carrying out the invention will be described below in detail with reference to the drawings. In the drawings, the same components are denoted by the same reference numerals, and redundant description will be appropriately omitted.

The embodiments described below illustrates a relay box for embodying a technical concept of the present invention, and the present invention is not limited to the embodiments described below. The dimensions, materials, shapes, relative arrangements, and the like of the components described below are intended to be illustrative rather than limiting as to the scope of the present invention unless otherwise specified. Furthermore, the sizes, positional relationships, and the like of members illustrated in the drawings may be exaggerated to clarify the description.

A relay box according to the embodiments is a box-type electric wiring member that relays and connects a sensor cable with one end coupled to a sensor, that is provided in a mold, and a relay cable with one end coupled to an amplifier, that is provided outside the mold.

In a case where a relay member such as a relay box is attached to a mold, a part of the sensor cable that is relayed and connected by the member is exposed to the outside from the mold. With this arrangement, there is a risk that the sensor cable is disconnected due to an event that an injection molding device, an operator, or the like, may get caught on the exposed part. The term "exposed" means that the sensor cable is not covered to be protected in a state in that the sensor cable can be caught by an external element, such as an injection molding device, or an operator. The term "unexposed" means not exposed.

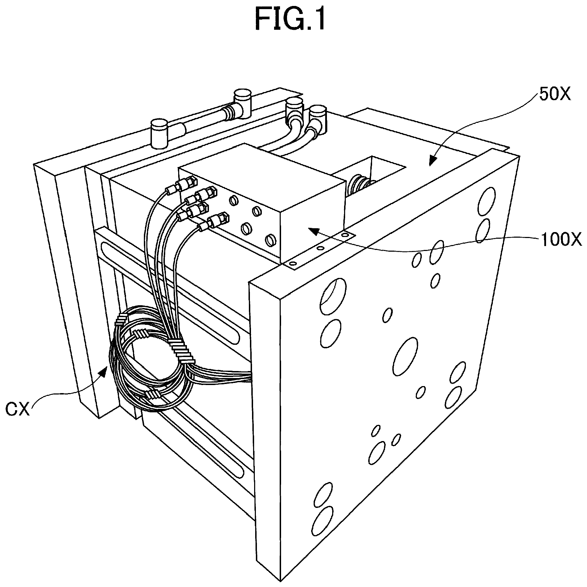

FIG. 1 is a diagram illustrating a state in that a relay member 100X is attached to a mold according to a comparative example. As illustrated in FIG. 1, the relay member 100X is attached to the upper surface of a mold 50X in the vertical direction. One end of a sensor cable CX is coupled to a sensor provided in the mold 50X, and the other end is coupled to the relay member 100X. A part of the sensor cable CX is exposed to the outside of the mold 50X. The exposed portion may be caught by an injection molding device, an operator, or the like when the mold is attached to, or detached from, the injection molding device.

A relay box 100 according to the embodiment includes a first connector coupled to the other end of the relay cable, a second connector coupled to the other end of the sensor cable, a relay part electrically connecting the first connector and the second connector, and a detachable member that is attachable to and detachable from the relay part. In a case where the detachable member is detached from the relay part, the relay box 100 is attached to the mold such that the second connector is unexposed from the mold, and, in a case where the detachable member is attached to the relay part, the relay box 100 is attached to the mold such that the second connector is unexposed from the detachable member.

For example, in a case where the mold is larger than the relay box 100 and the relay box 100 can be embedded in the mold, the relay box 100 is embedded in the mold such that the second connector is unexposed from the mold in a state that the detachable member is detached from the relay part. On the other hand, in a case where the mold is smaller than the relay box 100 and the relay box 100 cannot be embedded in the mold, the relay box 100 is externally attached to the mold such that the second connector is unexposed from the detachable member in a state that the detachable member is attached to the relay part.

With this configuration, since the second connector is unexposed even in a case where the relay box 100 is attached to any mold, the sensor cable can be coupled to the second connector without being exposed, and the relay box 100 can reduce the risk of disconnection of the sensor cable.

Hereinafter, the relay box 100 will be described in detail. In the drawings described below, directions may be indicated by an X axis and a Y axis. An X direction along the X axis indicates a moving direction of a movable mold included in the mold, and a Y direction along the Y axis indicates a vertical direction.

Furthermore, a direction in that an arrow is directed in the X direction is referred to as a +X direction, a direction opposite to the +X direction is referred to as a -X direction, a direction in that an arrow is directed in the Y direction is referred to as a +Y direction, and a direction opposite to the +Y direction is referred to as a -Y direction. However, these do not limit the orientation of the relay box in use, and the relay box can be in any orientation.

### (Configuration of Injection Molding Device)

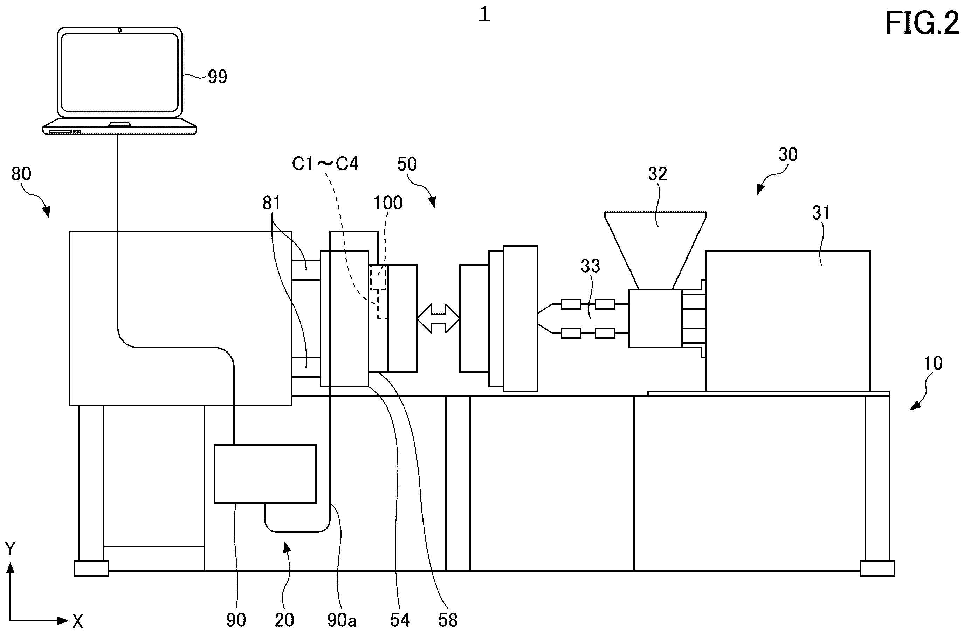

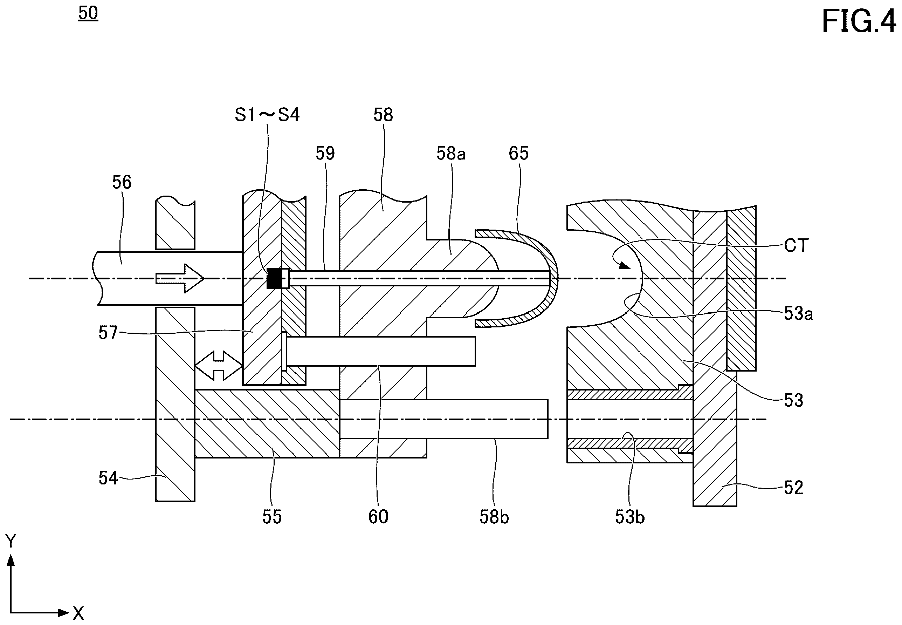

FIG. 2 is a side view illustrating an injection molding device in that the relay box 100 according to the embodiment is embedded in a mold. An injection molding device 1 includes an injection unit 30 supported in a state of being placed on a bed 10, a mold 50 detachably provided in the injection molding device 1, and a mold clamping unit 80. A pressure-detecting device 20 including load cells S1 to S4 (see FIG. 4) and an amplifier 90 is coupled to the injection molding device 1 via the relay box 100. The relay box 100 is embedded in a movable-side mold 58, that is a part of the mold 50, in a state in that an exterior cover, that is an example of a detachable member, is detached.

The injection unit 30 includes a drive part 31 using a hydraulic motor, a hopper 32, a cylinder 33, and the like. The injection unit 30 heats the material supplied from the hopper 32 by the cylinder 33, and drives the cylinder 33 by the drive part 31 to inject the material that is heated (hereinafter, also referred to as "heated material") into a cavity CT (see FIG. 4) of the mold 50 from the nozzle at the tip of the cylinder 33. Note that the use of a hydraulic motor in the injection unit 30 is merely an example, and an electric motor may be used instead of the hydraulic motor. In this case, the following description also applies in the same manner.

The mold 50 molds the heated material injected from the cylinder 33 of the injection unit 30 in the cavity CT, and then discharges the molded material.

The mold clamping unit 80 is, for example, a toggle-type or direct-pressure-type mechanism part that applies pressure for opening and closing the mold 50 or holding the mold 50 in a closed state against the pressure of the heated material filled in the cavity CT.

In the pressure-detecting device 20, the amplifier 90 (amplification part) is coupled to the load cells S1 to S4 via a relay cable 90a, the relay box 100, and sensor cables C1 to C4 so as to receive the detection signals from the load cells S1 to S4. Since the sensor cables C1 to C4 are connected, in the movable-side mold 58, to the relay box 100 embedded in the movable-side mold 58, the sensor cables are unexposed to the outside.

The amplifier 90 is also coupled to a personal computer 99 (information processing device). The amplifier 90 is disposed inside or outside the bed 10 in consideration of the connectivity with the load cells S1 to S4 using the sensor cables C1 to C4.

The amplifier 90 amplifies the detection signals from the load cells S1 to S4 that are input via the sensor cables C1 to C4, the relay box 100, and the relay cable 90a, and outputs the amplified signals to the personal computer 99.

The personal computer 99 executes a predetermined process based on the internal pressure information of the cavity CT that is acquired from the amplified signals by the amplifier 90. The predetermined process includes a process of determining whether or not an internal pressure abnormality occurs in the cavity CT, a process of controlling the internal pressure of the cavity CT according to the determination result, and the like. The amplifier 90 may include at least a part of the processing functions of the personal computer 99. Furthermore, the connection between the amplifier 90 and the personal computer 99 is not limited to a wired connection, but may be a wireless connection using a method such as short-range wireless communication.

Here, it is preferable that the relay box 100 is embedded in the mold as far as possible. It is because that if the relay box 100 is embedded in the mold, protruding portions in the mold can be reduced and the configuration of the mold can be simplified while ensuring the state of the sensor cables C1 to C4 being unexposed.

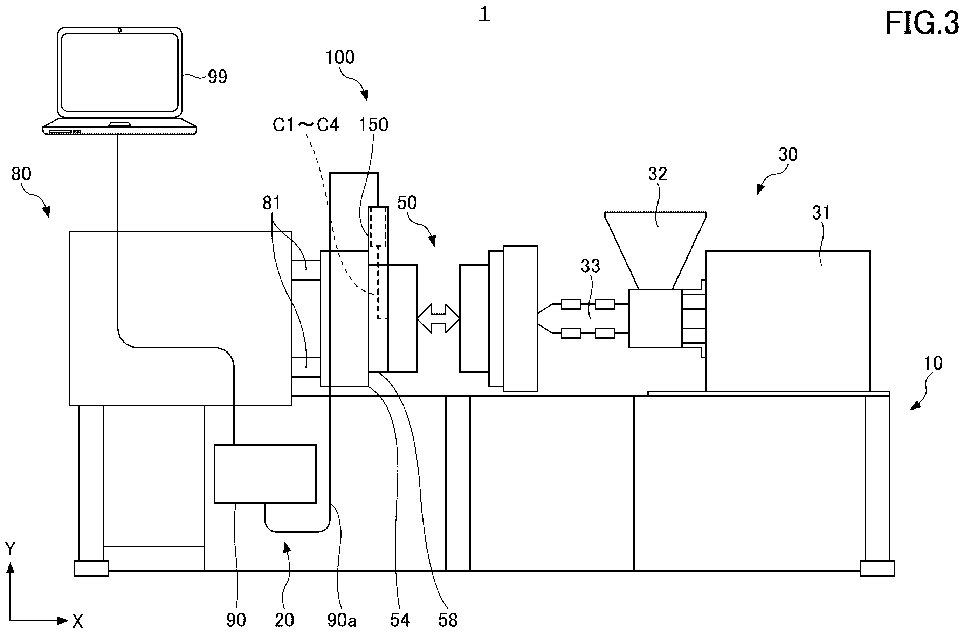

However, in a case where a space for embedding the relay box 100 is limited in a small mold for a small product or the like, the relay box 100 may not be embedded in the mold. In such a case, the relay box 100 is externally attached to the mold 50 with an exterior cover attached. FIG. 3 is a side view illustrating the injection molding device in that the relay box 100 is externally attached to the mold 50. The configuration of the injection molding device 1 is the same as that illustrated in FIG. 2 except that the relay box 100 is externally attached to the mold 50.

As illustrated in FIG. 3, the relay box 100 is externally attached to the upper surface of the movable-side mold 58 with an exterior cover 150 attached. Since the sensor cables C1 to C4 are coupled to the relay box 100 on the inner side of the exterior cover 150, the sensor cables are unexposed to the outside even in this configuration.

### (Configuration of Mold)

FIG. 4 is a diagram illustrating the configuration of the mold 50 in the injection molding device 1, and is a cross-sectional view of the mold 50 cut along a plane (XY plane) including the central axis of the movable-side mold 58 in FIG. 2 and FIG. 3.

As illustrated in FIG. 4, the mold 50 includes a fixed-side attachment plate 52, a fixed-side mold 53, a movable-side attachment plate 54, a spacer block 55, and the movable-side mold 58. The fixed-side mold 53 is attached to the fixed-side attachment plate 52, and the movable-side mold 58 is attached to the movable-side attachment plate 54 via the spacer block 55.

The fixed-side mold 53 is formed with a curved recessed portion 53a for forming the cavity CT between the fixed-side mold 53 and the movable-side mold 58, and a guide hole 53b. In the movable-side mold 58, a protruded portion 58a for forming the cavity CT between the movable-side mold 58 and the fixed-side mold 53 is formed, and a guide pin 58b is provided at a position facing the guide hole 53b of the fixed-side mold 53.

An ejector pin 59 is supported movably in the longitudinal direction in a state of penetrating through the center of the protruded portion 58a at a position that is the center portion of the movable-side mold 58 as well as the center of the cavity CT.

The tip portion of the ejector pin 59 abuts against a product 65 that is molded corresponding to the shape of the cavity CT to eject the product 65. The rear end portion of the ejector pin 59 is integrally attached to an ejector plate 57.

In the mold 50, a plurality of cavities CT are formed between the fixed-side mold 53 and the movable-side mold 58, and the load cells S1 to S4 are integrally attached to the end surfaces of the rear end portions of the ejector pins 59 corresponding to the respective cavities CT. That is, the load cells S1 to S4 are provided corresponding to each of the four cavities CT.

The load cells S1 to S4 detect a load acting on each of the load cells S1 to S4 via the respective ejector pins 59 due to the internal pressure of the cavities CT. The load cells S1 to S4 output the detection signals to the amplifier 90 via the respective sensor cables C1 to C4, the relay box 100, and the relay cable 90a.

The pressure-detecting device 20 causes the personal computer 99 to convert the detection signals from the load cells S1 to S4 into pressure information to detect the internal pressure of the cavities CT. The internal pressure of the cavities CT is, for example, filling pressure of the heated material filled into the cavities CT by the injection unit 30.

An ejector rod 56 is attached to the ejector plate 57 on the side of the movable-side attachment plate 54, and a return pin 60 is attached to the ejector plate 57 on the side of the movable-side mold 58. The ejector rod 56 is attached to the ejector plate 57 in a state of penetrating through the movable-side attachment plate 54. A spring for returning the ejector plate 57 to its original position is attached to the return pin 60.

The mold clamping unit 80 (see FIG. 2 and FIG. 3) has a hydraulic cylinder inside its housing, and includes four tie bars 81 connecting four corners of the housing to four corners of the fixed-side attachment plate 52 and the movable-side attachment plate 54. The ejector rod 56 of the mold 50 is coupled to the hydraulic cylinder of the mold clamping unit 80.

### (Configuration of Relay Box 100)

### ((State in that Exterior Cover 150 is Detached))

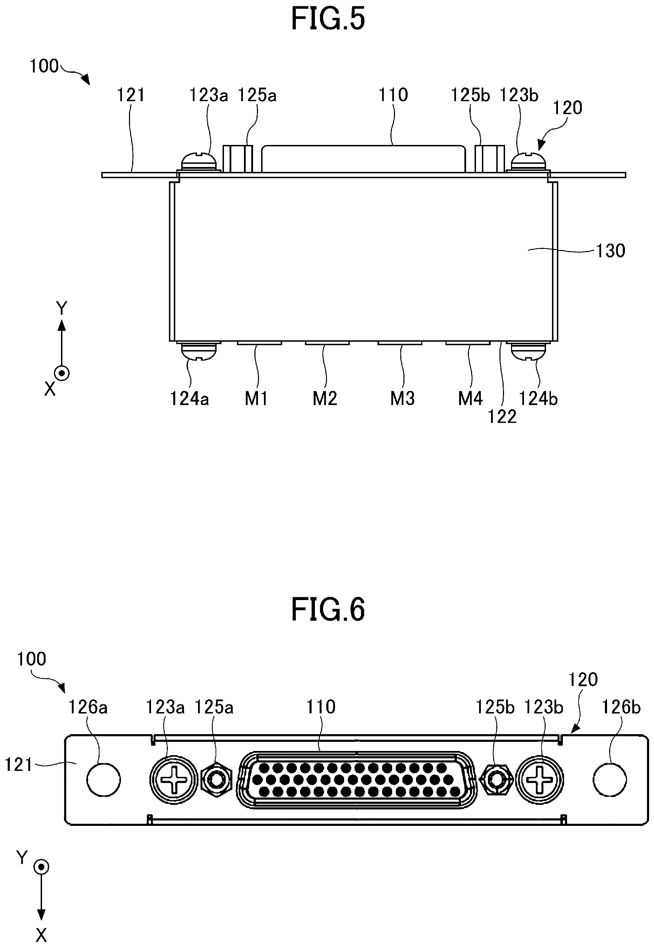

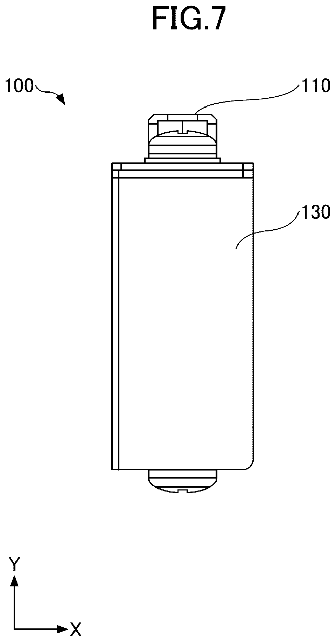

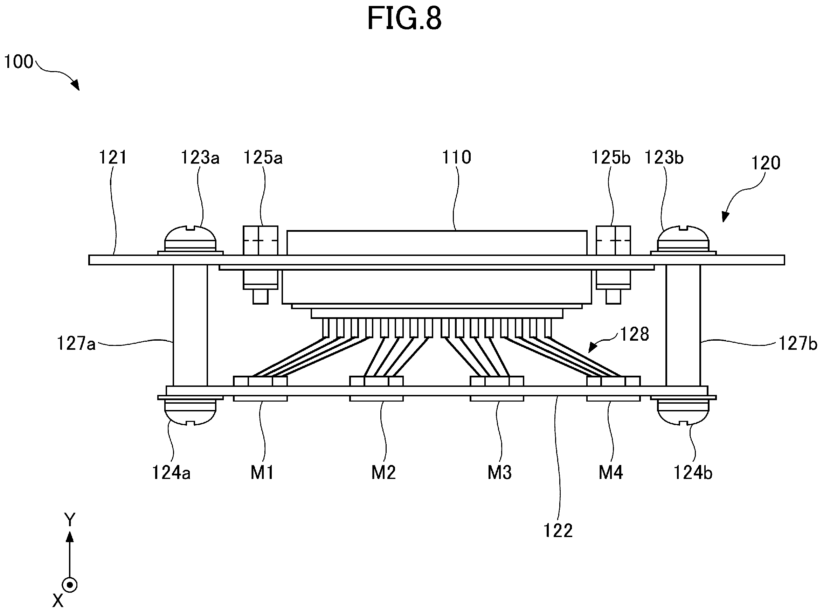

FIG. 5 to FIG. 8 are views illustrating the relay box 100 from that the exterior cover 150 is detached. FIG. 5 is a front view of the relay box 100 viewed from the +X direction, FIG. 6 is a top view of the relay box 100 viewed from the +Y direction, FIG. 7 is a side view of the relay box 100 viewed from a direction orthogonal to the X direction and the Y direction, and FIG. 8 is a front view of the relay box 100 in a state in that a protective member is detached.

As illustrated in FIG. 5 to FIG. 8, the relay box 100 includes a box-side Dsub connector 110, box-side round connectors M1 to M4, a relay part 120, and a protective member 130.

The box-side Dsub connector 110 is an example of a first connector coupled to the other end of the relay cable 90a. One end of the relay cable 90a is coupled to the amplifier 90 provided outside the mold 50.

When a cable-side Dsub male connector provided at the other end of the relay cable 90a is inserted into the box-side Dsub connector 110 that is a female connector, the box-side Dsub connector 110 and the relay cable 90a are coupled to each other. The cable-side Dsub connector may be a female connector, and the box-side Dsub connector 110 may be a male connector. The first connector is not limited to the Dsub connector, and a connector having any shape can be applied, however, the Dsub connector is preferable in terms of heat resistance since the temperature around the mold 50 becomes high.

Each of the box-side round connectors M1 to M4 is an example of a second connector that is coupled to, as a pair, the other end of each of the sensor cables C1 to C4. One end of each of the sensor cables C1 to C4 is coupled to the respective load cells S1 to S4 provided in the mold 50.

When the cable-side round male connectors provided at the other ends of the sensor cables C1 to C4 are inserted into the box-side round female connectors M1 to M4, respectively, the box-side round connectors M1 to M4 and the sensor cables C1 to C4 are connected, respectively. The cable-side round connectors may be female connectors, and the box-side round connectors M1 to M4 may be male connectors. Furthermore, the second connector is not limited to a round connector and may have any shape. Since the temperature around the mold 50 becomes high as described above, it is preferable that the second connector has high heat resistance.

As illustrated in FIG. 8, the relay part 120 includes an upper surface plate 121, a lower surface plate 122, upper screws 123a and 123b, lower screws 124a and 124b, spacer sleeves 125a and 125b, column members 127a and 127b, and a connection cord 128. The relay part 120 is a component that electrically connects the box-side Dsub connector 110 and each of the box-side round connectors M1 to M4.

Female screws are formed at both ends of each of the column members 127a and 127b. The upper surface plate 121 is fixed to the column members 127a and 127b by the upper screws 123a and 123b so as to face the one ends of the column members 127a and 127b. The lower surface plate 122 is fixed to the column members 127a and 127b by the lower screws 124a and 124b so as to face the other ends of the column members 127a and 127b.

In the upper surface plate 121, the box-side Dsub connector 110 is provided on a surface opposite to the side facing the column members 127a and 127b. Attachment holes 126a and 126b, that are through holes, are also formed in the upper surface plate 121 (see FIG. 6). In the lower surface plate 122, the box-side round connectors M1 to M4 are provided on a surface opposite to the side facing the column members 127a to 127b.

The spacer sleeves 125a and 125b are provided to prevent the cable-side Dsub connector coupled to the box-side Dsub connector 110 from coming off. Male screws are formed at both ends of each of the spacer sleeves 125a and 125b. The male screws are fastened to the spacer sleeves 125a and 125b via the cable-side Dsub connector coupled to the box-side Dsub connector 110. Thus, the cable-side Dsub connector can be more firmly coupled to the box-side Dsub connector 110.

The connection cord 128 includes a plurality of wire cords that connect the plurality of signal pins in the box-side Dsub connector 110 and a plurality of signal pins in the box-side round connectors M1 to M4 so as to form pairs. The box-side Dsub connector 110 and the box-side round connectors M1 to M4 are electrically coupled to each other by the connection cord 128.

In the present embodiment, the box-side Dsub connector 110 has 16 signal pins. Each of the box-side round connectors M1 to M4 has four signal pins, and the box-side round connectors M1 to M4 as a whole have 16 signal pins. However, the number of signal pins is not particularly limited and can be appropriately selected in accordance with the type and specification of the sensor.

The protective member 130 includes a metal material such as a sheet metal or aluminum, and is provided between the upper surface plate 121 and the lower surface plate 122 so as to cover the periphery of the relay part 120. The protective member 130 is a member that protects the relay part 120, and particularly prevents disconnection of the connection cord 128.

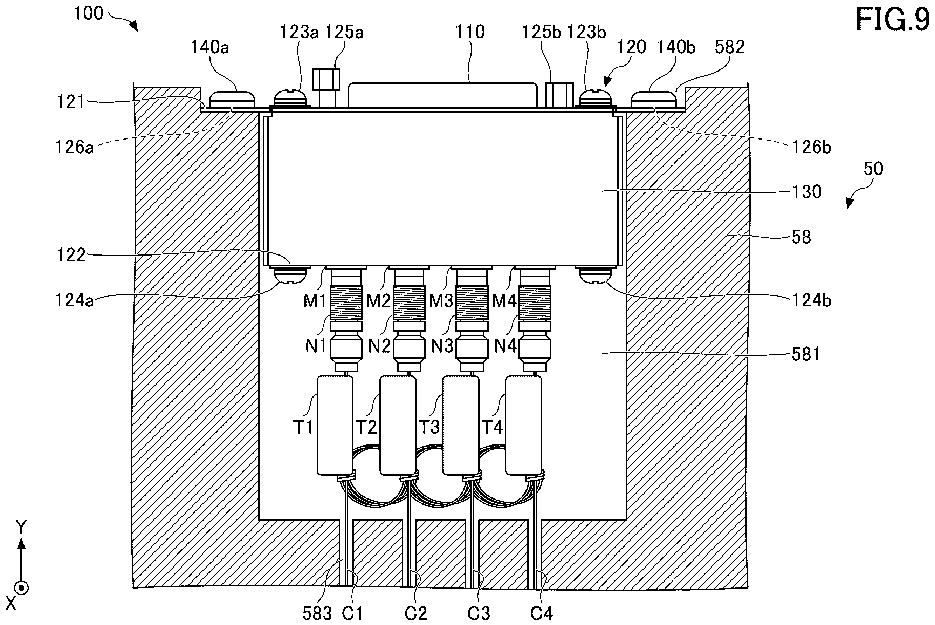

FIG. 9 is a diagram illustrating an example of a state in that the relay box 100 from that the exterior cover 150 is detached is embedded in the mold 50.

As illustrated in FIG. 9, an embedding hole 581 and a counterbore hole 582 are formed in the movable-side mold 58 of the mold 50. The counterbore hole 582 is formed around the embedding hole 581 in the vicinity of the opening of the embedding hole 581, and a plurality of female screws are formed in the bottom portion of the counterbore hole so as to correspond to the attachment holes 126a and 126b in the relay box 100.

The relay box 100 is inserted into the embedding hole 581, and the fixing screws 140a and 140b are fastened to the female screws at the bottom portion of the counterbore hole 582 via the attachment holes 126a and 126b; thereby, the relay box 100 is fixed to the movable-side mold 58.

In other words, in a case where the exterior cover 150 is detached from the relay part 120, the relay box 100 is attached to the mold 50 via the relay part 120. Also, in a case where the exterior cover 150 is detached from the relay part 120, the attachment holes 126a and 126b in the relay part 120 are used to attach the relay box 100 to the mold 50.

A space for disposing the sensor cables C1 to C4 is provided below (on the -Y direction side of) the relay box 100 in the embedding hole 581. In this space, the box-side round connectors M1 to M4 are connected in pairs to cable-side round connectors N1 to N4, respectively.

The sensor cables C1 to C4 are connected in pairs to the cable-side round connectors N1 to N4, respectively. A plurality of through holes 583 corresponding to the sensor cables C1 to C4 is formed in the bottom portion of the embedding hole 581, and the sensor cables C1 to C4 are coupled to the load cells S1 to S4 through the through holes 583. Tags T1 to T4 are plates that display information such as the types and attributes of the respective sensor cables C1 to C4.

The sensor cables C1 to C4 have a sufficient length so as to be able to cope with installation in various molds, and in the example illustrated in FIG. 9, each of the excess portions for the sensor cables C1 to C4 is bundled in a ring shape. The embedding hole 581 is formed in a size capable of accommodating the tags T1 to T4, the sensor cables C1 to C4 bundled in a ring shape, and the like.

In the relay box 100, in a case where the exterior cover 150 is detached, the box-side Dsub connector 110 is exposed from the mold 50. On the other hand, since the box-side round connectors M1 to M4 are accommodated in the embedding hole 581, the box-side round connectors are unexposed from the mold 50. Since the sensor cables C1 to C4 coupled to the box-side round connectors M1 to M4 are accommodated in the embedding hole 581, the sensor cables are also unexposed from the mold 50.

### ((State in that Exterior Cover 150 is Attached))

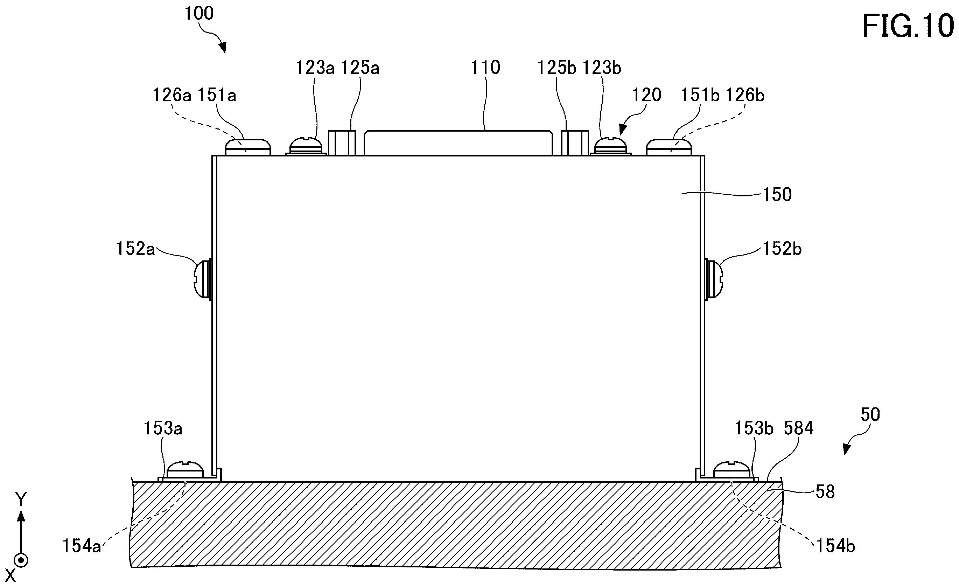

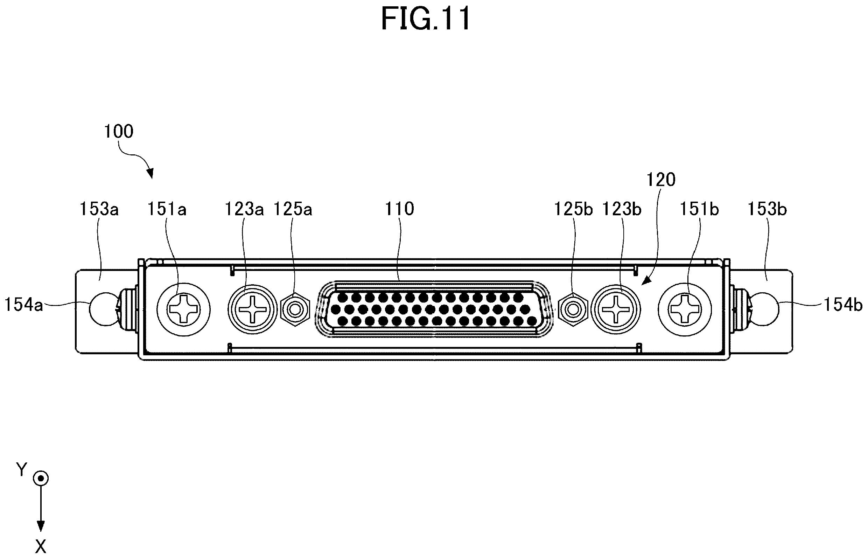

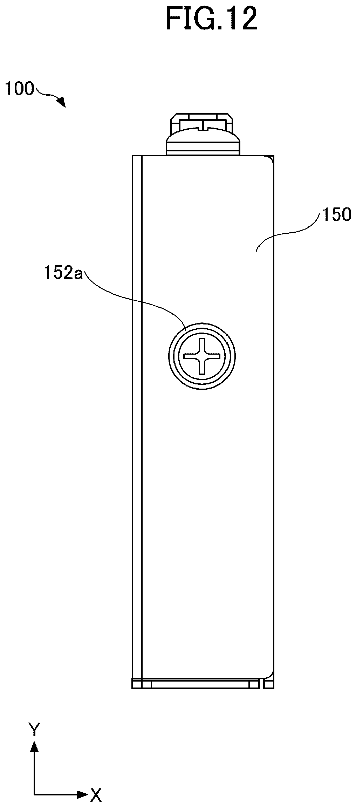

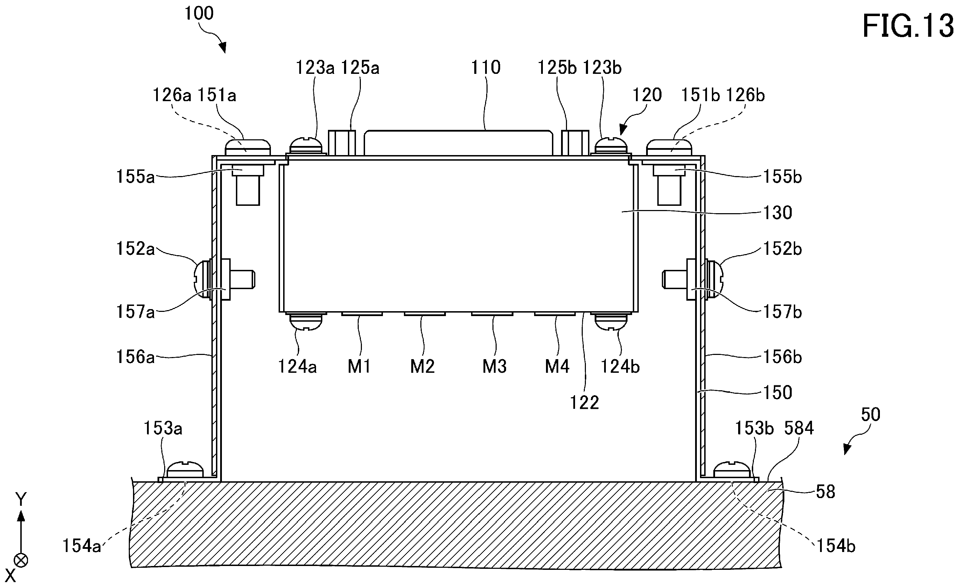

FIG. 10 to FIG. 13 are views illustrating the relay box 100 to that the exterior cover 150 is attached. FIG. 10 is a front view of the relay box 100 viewed from the +X direction, FIG. 11 is a top view of the relay box 100 viewed from the +Y direction, FIG. 12 is a side view of the relay box 100 viewed from a direction orthogonal to the X direction and the Y direction, and FIG. 13 is a rear view of the relay box 100 viewed from the -X direction.

As illustrated in FIG. 10 to FIG. 13, the relay box 100 includes the exterior cover 150.

The exterior cover 150 is an example of a detachable member that is attachable to and detachable from the relay part 120, and is a box-shaped member in that the -X direction side and the -Y direction side are open. However, the -X direction side may not necessarily be opened. The exterior cover 150 includes a metal material such as a sheet metal or aluminum.

On the upper surface (the surface on the +Y direction side) of the exterior cover 150, through holes are formed at positions corresponding to the attachment holes 126a and 126b of the relay box 100. Upper cover screws 151a and 151b are inserted from the upper surface side so as to pass through the through holes and the attachment holes 126a and 126b, and the upper cover screws 151a and 151b are fastened to upper nuts 155a and 155b, respectively. Thereby, the exterior cover 150 is attached to the relay part 120. Also, by removing the upper cover screws 151a and 151b, the exterior cover 150 is detached from the relay part 120.

Side plates 156a and 156b are respectively provided on both side surfaces of the exterior cover 150. Lateral screws 152a and 152b are inserted so as to pass through the exterior cover 150 and respective through holes formed on the side plates 156a and 156b. Each of the lateral screws 152a and 152b is fastened to lateral nuts 157a and 157b, respectively, and the side plates 156a and 156b are then attached to the exterior cover 150.

Bottom plates 153a and 153b are formed at the bottom of the exterior cover 150. Cover attachment holes 154a and 154b, that are through holes, are formed in the bottom plates 153a and 153b, respectively (see FIG. 11). The relay box 100 to that the exterior cover 150 is attached is attached to the upper surface 584 of the movable-side mold 58 via the cover attachment holes 154a and 154b.

In other words, in a case where the exterior cover 150 is attached to the relay part 120, the relay box 100 is attached to the mold 50 via the exterior cover 150. In a case where the exterior cover 150 is attached to the relay part 120, the attachment holes 126a and 126b in the relay part 120 are used to attach the exterior cover 150 to the relay part 120.

In the relay box 100, in a case where the exterior cover 150 is attached, the box-side Dsub connector 110 is exposed from the exterior cover 150. On the other hand, since the box-side round connectors M1 to M4 are accommodated inside the exterior cover 150, the box-side round connectors are unexposed from the exterior cover 150. Since the sensor cables C1 to C4 coupled to the box-side round connectors M1 to M4 are also accommodated inside the exterior cover 150, the sensor cables are unexposed from the exterior cover 150.

### (Operation Effect of Relay Box 100)

As described above, the relay box 100 includes the box-side Dsub connector 110 (first connector) coupled to the other end of the relay cable 90a and the box-side round connectors M1 to M4 (second connectors) coupled to the other ends of the sensor cables C1 to C4. The relay box 100 also includes the relay part 120 that electrically connects the box-side Dsub connector 110 and the box-side round connectors M1 to M4, and the exterior cover 150 (detachable member) that is attachable to and detachable from the relay part 120.

In a case where the exterior cover 150 is detached from the relay part 120, the relay box 100 is attached to the mold such that the box-side round connectors M1 to M4 are unexposed from the mold 50. In a case where the exterior cover 150 is attached to the relay part 120, the relay box 100 is attached to the mold 50 such that the box-side round connectors M1 to M4 are unexposed from the exterior cover 150.

In a case where the mold 50 is larger than the relay box 100 and the relay box 100 can be embedded in the mold 50, the relay box 100 is embedded in the mold 50 such that the box-side round connectors M1 to M4 are unexposed from the mold 50 in a state in that the exterior cover 150 is detached from the relay part 120. On the other hand, in a case where the mold 50 is smaller than the relay box 100 and the relay box 100 cannot be embedded in the mold 50, the relay box 100 is externally attached to the mold 50 such that the box-side round connectors M1 to M4 are unexposed from the exterior cover 150 in a state in that the exterior cover 150 is attached to the relay part 120.

With this arrangement, even in a case where the relay box 100 is attached to any mold, the box-side round connectors M1 to M4 are unexposed, and thus the sensor cables C1 to C4 can be coupled to the box-side round connectors M1 to M4 without being exposed. As a result, the relay box capable of preventing the relayed and connected sensor cables C1 to C4 from being caught by a forming machine, an operator, or the like and reducing the risk of disconnection of the sensor cables C1 to C4 can be provided.

In the present embodiment, the configuration of the relay box 100 is common between the case where the relay box 100 is embedded in the mold 50 and the case where the relay box 100 is externally attached to the mold 50 except for the presence or absence of the exterior cover 150.
Accordingly, since it is not necessary to prepare a dedicated relay box for each mold having a different size, the cost of the relay box can be reduced. Furthermore, since the relay box 100 can be switched between a state in that it can be embedded in the mold 50 and a state in that it can be externally attached to the mold 50 only by attaching and detaching the exterior cover 150, the work of attaching the relay box 100 to the mold 50 is also facilitated.

In a case where the exterior cover 150 is detached from the relay part 120, the relay box 100 is attached to the mold 50 such that the box-side Dsub connector 110 is exposed from the mold 50. On the other hand, in a case where the exterior cover 150 is not detached from the relay part 120, the relay box 100 is attached to the mold 50 such that the box-side Dsub connector 110 is exposed from the exterior cover 150. With this configuration, in a case where the relay box 100 is attached to any mold, the amplifier 90 provided outside the mold 50 and the relay box 100 can be coupled to each other via the relay cable 90a.

In a case where the exterior cover 150 is detached from the relay part 120, the relay box 100 is attached to the mold 50 via the relay part 120. On the other hand, in a case where the exterior cover 150 is attached to the relay part 120, the relay box 100 is attached to the mold 50 via the exterior cover 150. With this configuration, the relay box 100 can be attached to any mold while making the configuration of the relay box 100 common between the case where the relay box 100 is embedded in the mold 50 and the case where the relay box 100 is externally attached to the mold 50 except for the presence or absence of the exterior cover 150.

The relay box 100 further includes the protective member 130 that protects the relay part 120. By covering the periphery of the connection cord 128 in the relay part 120 with the protective member 130, the risk of disconnection of the connection cord 128 due to application of an external force to the connection cord 128 or the like can be reduced.

The relay part 120 includes the attachment holes 126a and 126b. In a case where the exterior cover 150 is attached to the relay part 120, the attachment holes 126a and 126b are used to attach the exterior cover 150 to the relay part 120. In a case where the exterior cover 150 is detached from the relay part 120, the attachment holes 126a and 126b are used to attach the relay box 100 to the mold 50. With this configuration, except for the presence or absence of the exterior cover 150, the relay box 100 can be attached to any mold while making the configuration of the relay box 100 common between the case where the relay box 100 is embedded in the mold 50 and the case where the relay box 100 is externally attached to the mold 50.

In the above embodiments, the load cells S1 to S4 are illustrated as the sensors, but the sensors are not limited thereto. For example, the sensor may be a pressure sensor such as a strain gauge that detects a pressure, a temperature sensor that detects a temperature in the mold 50, or the like. Furthermore, although the case where the number of each of the sensors, the sensor cables, the first connectors, the second connectors, and the like is four is illustrated, the number is not limited to four, and any number may be adopted. In this case, the same operation effects as those in the above embodiments can also be obtained.

In the above embodiments, the configuration in that the relay box 100 is attached to the movable-side mold 58 of the mold 50 is illustrated. However, the embodiments are not limited to the configuration described above. As long as each of the sensor cables C1 to C4 and the relay cable 90a can be coupled to the relay box 100, the relay box 100 may be attached to any one of the movable-side mold 58, the fixed-side mold 53, and the like. Further, the relay box 100 may be attached in any attitude. Also, in these cases, the same operation effects as those in the above embodiments can also be obtained.

Although the embodiments are described above, the present invention is not limited to the specifically disclosed embodiments, and various modifications and changes can be made without departing from the scope of the claims.

The numerals such as ordinal numbers and quantities used in the description of the embodiment are all illustrated to specifically describe the technique of the present invention, and the present invention is not limited to the illustrated numerals. Furthermore, the connection relationship between the constituent elements is illustrated for specifically describing the technique of the present invention, and the connection relationship for implementing the functions of the present invention is not limited thereto.

This application is based on and claims the priority to U.S. Provisional Application No. 63/175644, filed with the United States Patent and Trademark Office on April 16, 2021, and Japanese Patent Application No. 2021-094579, filed with the Japan Patent Office on June 4, 2021, the entire contents of that are incorporated herein by reference.

### Description of the Reference Symbols

- 1: injection molding device
- 20: pressure-detecting device
- 50: mold
- 52: fixed-side attachment plate
- 53: fixed-side mold
- 54: movable-side attachment plate
- 581: embedded hole
- 582: counterbore hole
- 583: through hole
- 584: upper surface
- 58: movable-side mold
- 90: amplifier
- 90a: relay cable
- 99: personal computer
- 100: relay box
- 110: box-side Dsub connector (an example of a first connector)
- 120: relay part
- 121: upper surface plate
- 122: lower surface plate
- 123a, 123b: upper screw
- 124a, 124b: lower screw
- 125a, 125b: spacer sleeve
- 127a, 127b: column member
- 128: connection cord
- 130: protective member
- 150: exterior cover (an example of a detachable member)
- 151a, 151b: upper cover screw
- 152a, 152b: lateral screw
- 153a, 153b: bottom plate
- 154a, 154b: cover attachment hole
- 155a, 155b: upper nut
- 156a, 156b: side plate
- 157a, 157b: lateral nut
- S1 to S4: load cell (an example of a sensor)
- C1 to C4: sensor cable
- CT: cavity
- M1 to M4: box-side round connector
- N1 to N4: cable-side round connector

## Claims

1. A relay box for performing relay connection between a sensor cable with one end coupled to a sensor, that is provided in a mold, and a relay cable with one end coupled to an amplifier, that is provided outside the mold, the relay box comprising:
a first connector coupled to the other end of the relay cable;
a second connector coupled to the other end of the sensor cable;
a relay part configured to electrically couples the first connector and the second connector; and
a detachable member attachable to, and detachable from, the relay part,
wherein, in a case where the detachable member is detached from the relay part, the relay box is attached to the mold such that the second connector is unexposed from the mold, and
wherein, in a case where the detachable member is attached to the relay part, the relay box is attached to the mold such that the second connector is unexposed from the detachable member.

2. The relay box according to claim 1,
wherein, in the case where the detachable member is detached from the relay part, the relay box is attached to the mold such that the first connector is exposed from the mold, and
wherein, in a case where the detachable member is not detached from the relay part, the relay box is attached to the mold such that the first connector is exposed from the detachable member.

3. The relay box according to claim 1 or 2, wherein, in the case where the detachable member is detached from the relay part, the relay box is attached to the mold via the relay part.

4. The relay box according to any one of claims 1 to 3, wherein, in the case where the detachable member is attached to the relay part, the relay box is attached to the mold via the detachable member.

5. The relay box according to any one of claims 1 to 4, further comprising:
a protective member configured to protect the relay part.

6. The relay box according to any one of claims 1 to 5,
wherein the relay part has an attachment hole,
wherein, in the case where the detachable member is attached to the relay part, the attachment hole is used to attach the detachable member to the relay part, and
wherein, in the case where the detachable member is detached from the relay part, the attachment hole is used to attach the relay box to the mold.
